# EUROPÄISCHE PATENTSCHRIFT

(11) **EP 0 189 077 B1**
(45) Veröffentlichungstag und Bekanntmachung des Hinweises auf die Patenterteilung: **10.03.1993**
(21) Anmeldenummer: 86100317.6
(22) Anmeldetag: 11.01.1986
(51) Int. Cl.: B60T 8/00

(54) **Bremsdrucksteuereinrichtung**
Brake pressure regulating device
Dispositif pour la commande de la pression de freinage

(30) Priorität: 23.01.1985 DE 3502049
(43) Veröffentlichungstag der Anmeldung: 30.07.1986
(73) Patentinhaber: WABCO Vermögensverwaltungs-GmbH, D-30432 Hannover (DE)
(72) Erfinder: Reinecke, Erich, Ing. grad., D-3167 Burgdorf (Beinhorn) (DE)
(74) Vertreter: Schrödter, Manfred, Dipl.-Ing.

(56) Entgegenhaltungen:
- EP-A- 0 062 246
- WO-A-83/03230
- DE-A- 1 963 018
- DE-A- 2 043 729
- DE-A- 2 318 499
- DE-A- 3 330 482
- GB-A- 2 139 763
- GB-A- 2 140 112
- GB-A- 2 844 227
- US-A- 4 020 454
- US-A- 4 207 968
- US-A- 4 402 047
- PATENT ABSTRACTS OF JAPAN, Band 9, Nr. 252 (M-420)(1975), 9. Oktober1985

## Beschreibung

Die Erfindung betrifft eine Bremsdrucksteuereinrichtung nach dem Oberbegriff der Patentansprüche 1 und 2.

Es ist bekannt, in einer Bremsanlage eines Kraftfahrzeugs oder einer Fahrzeugkombination aus dem Kraftfahrzeug und einem Anhänger die Beaufschlagung druckmittelbetätigter Radbremsen mit Bremsdruck aus einer oder mehreren Druckquellen mittels einer willkürlich betätigbaren Bremsauslöseeinrichtung zu steuern. Die Bremsauslöseeinrichtung wird vom Fahrer über Hand- oder Fußkraft betätigt und steuert die Höhe des Bremsdruckes abhängig von der Betätigungskraft oder dem Betätigungsweg. Im Falle eines Anhängers bzw. einer aus dem Kraftfahrzeug und dem Anhänger gebildeten Fahrzeugkombination enthält die Bremsauslöseeinrichtung eine von dem Bremsdruck im Kraftfahrzeug gesteuerte Einrichtung zur Mitsteuerung des Bremsdruckes zu den Radbremsen des Anhängers.

Eine Bremsdrucksteuereinrichtung der eingangs genannten Art ist aus der GB-A-2 140 112 bekannt. Die elektrisch steuerbaren Druckregelventile sind dort Radbremsen eines ersten Bremskreises und eines zweiten Bremskreises vorgeschaltet. Als Sensoreinrichtungen sind dort Bremsdrucksensoren an den Radbremsen des ersten Bremskreises und ein Steuerdrucksensor für den zweiten Bremskreis vorgesehen. Die Steuerelektronik verarbeitet dort die Ausgangssignale der Sensoreinrichtungen und davon unabhängige Fahrzeugparameter wie Hinterachslast, Hinterradschlupf und ein Hinterradsteuersignal. Die Steuerelektronik ist so ausgebildet, daß sie die dem ersten Bremskreis zugeordneten Regelventile derart ansteuert, daß sie den Bremsdruck der zugehörigen Radbremsen auf einen Wert begrenzen, der um ein von den genannten Fahrzeugparametern abhängiges Maß von dem Steuerdruck des zweiten Bremskreises abweicht. Diese Bremsdrucksteuereinrichtung verfolgt das Ziel einer vereinfachten lastabhängigen Bremsdruckverteilung.

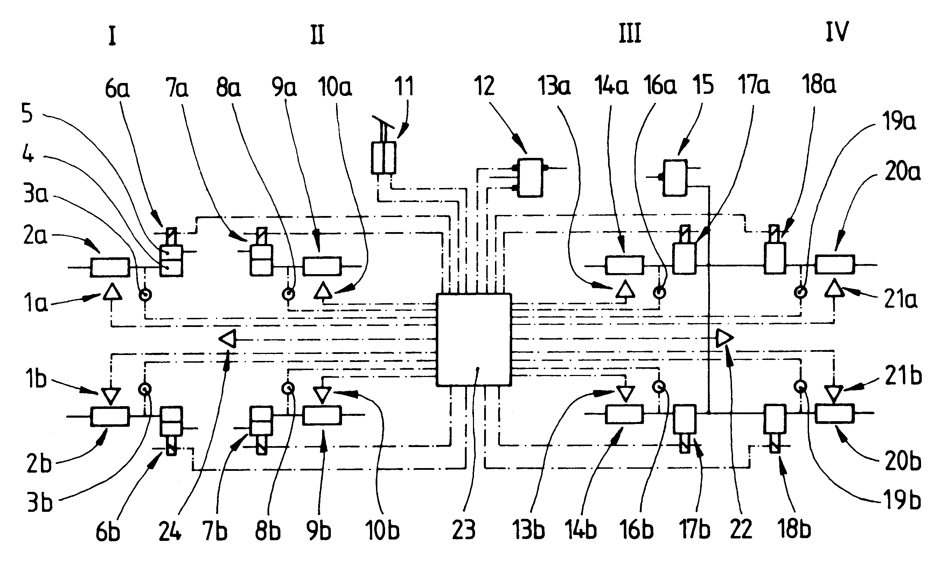

Aus der DE-A-20 43 729, dort insbesondere Figuren 3, 5, 6 und 8 ist eine Bremsdrucksteuereinrichtung für eine Vorderradbremse und eine Hinterradbremse bekannt, in der der Hinterradbremse ein elektrisch steuerbares Druckregelventil vorgeschaltet und der Vorderradbremse eine Bremswertsensoreinrichtung zur Erfassung der Bremskraft bzw. des Bremsmomentes zugeordnet ist. Das Druckregelventil ist zugleich als lastabhängiger Bremsdruckregler ausgebildet. Eine Steuerelektronik steuert das Druckregelventil nach Maßgabe des Ausgangssignals der Bremswertsensoreinrichtung im Sinne einer Abstimmung des der Hinterradbremse zugeführten Bremsdruckes an die von der Vorderradbremse erzeugte Bremskraft. Hauptziel dieses Gegenstands ist, ein Mitblockieren des Hinterrades im Falle eines Blockierens des Vorderrades zu verhindern.

Aus der US-A-2 844 227 ist eine Bremsdrucksteuereinrichtung bekannt, in der ein der Radbremse vorgeschaltetes elektrisch steuerbares Druckregelventil in Verbindung mit einer Steuerelektronik und einer Temperatursensoreinrichtung den Bremsdruck der Radbremse mit erhöhter Geschwindigkeit abbaut, wenn die Temperatursensoreinrichtung eine vorbestimmte Höchsttemperatur an der Radbremse feststellt.

Da die zu den Radbremsen gehörigen Bauteile Fertigungstoleranzen und Schwankungen der Stoffwerte der in ihnen verwendeten Werkstoffe, beispielsweise Reibwertschwankungen des Bremsbelages, aufweisen, können die Radbremsen auf beiden Seiten einer Achse und/oder die Radbremsen einer oder mehrerer Vorderachsen gegenüber den Radbremsen einer oder mehrerer Hinterachsen des Kraftfahrzeugs oder des Anhängers oder der Fahrzeugkombination und/oder die Radbremsen des Kraftfahrzeugs gegenüber den Radbremsen des Anhängers bei gleichem von der Bremsauslöseeinrichtung ausgesteuerten Bremsdruck ungleiche Bremskräfte bzw. Bremsmomente erzeugen.

Der Erfindung liegt deshalb die Aufgabe zugrunde, eine Bremsdrucksteuereinrichtung der eingangs genannten Art so zu verbessern, daß sie mit einfachen Mitteln eine Angleichung und/oder eine achslastverteilungsabhängige Anpassung der von den Radbremsen auf der linken und der rechten Fahrzeugseite einer oder mehrerer Achsen und/oder einer oder mehrerer Vorderachsen und einer oder mehrerer Hinterachsen des Kraftfahrzeugs oder des Anhängers oder der Fahrzeugkombination und/oder des Kraftfahrzeugs und des Anhängers erzeugten Bremskräfte bzw. Bremsmomente bzw. Radbremstemperaturen ermöglicht.

Diese Aufgabe wird durch die in den Patentansprüchen 1 und 2 angegebene Erfindung gelöst . Weiterbildungen und vorteihafte Ausgestaltungen der Erfindung sind in den Unteransprüchen angegeben.

Die Erfindung läßt sich sowohl bei pneumatisch als auch bei hydraulisch betätigten Radbremsen als auch bei einer Kombination dieser Betätigungsarten ausführen.

Die Erfindung läßt sich sowohl bei einer fremdkraftbetätigten als auch einer fremdkraftunterstützten als auch bei einer muskelkraftbetätigten Bremsanlage ausführen.

Die Erfindung ermöglicht die gegenseitige Angleichung der Bremskräfte bzw. Bremsmomente der Radbremsen bzw. der Radbremstemperaturen an beiden Seiten einer oder mehrerer Achsen des Kraftfahrzeugs und/oder des Anhängers.

Die Erfindung ermöglicht auch die gegenseitige Angleichung der Bremskräfte bzw. Bremsmomente der Radbremsen bzw. der Radbremstemperaturen an einer oder mehreren Achsen des Kraftfahrzeugs an die Werte der Radbremsen an einer oder mehreren Achsen des Anhängers.

Die Erfindung ermöglicht auch die gegenseitige Angleichung der Bremskräfte bzw. Bremsmomente der Radbremsen bzw. der Radbremstemperaturen einer oder mehrerer Achsen des Kraftfahrzeugs oder des Anhängers an die Werte der Radbremsen einer oder mehrerer anderer Achsen des Kraftfahrzeugs oder des Anhängers.

Die Erfindung ermöglicht auch die gegenseitige Angleichung der Gesamtbremskraft der Radbremsen eines Kraftfahrzeugs an die Gesamtbremskraft der Radbremsen des Anhängers, wenn beide in einer Fahrzeugkombination zusammengefaßt sind.

Im Fall einer Fahrzeugkombination erbringt die Erfindung die vorstehend erwähnten Vorteile insbesondere dann, wenn Kraftfahrzeug und Anhänger bzw. die bremskraftmäßig bzw. temperaturmäßig anzugleichenden Achsen einen im wesentlichen gleichen relativen Auslastungsgrad haben.

Die Radbremsen können in Bremskreisen zusammengefaßt sein. Beispielsweise können die Radbremsen von einer oder mehreren Vorderachsen oder die Radbremsen von einer oder mehreren Hinterachsen des Kraftfahrzeugs und/oder des Anhängers jeweils zu einem Bremskreis zusammengefaßt sein. Es können auch Radbremsen an diagonal einander gegenüberliegenden Achsseiten oder Teile davon zu einem Bremskreis zusammengefaßt sein. Es kann auch das Kraftfahrzeug oder der Anhänger mehrere Bremskreise und der jeweils andere Teil der Fahrzeugkombination nur einen Bremskreis aufweisen.

Das Kraftfahrzeug und/oder der Anhänger können in bekannter Weise einer oder mehreren Achsen oder einer oder mehreren Radbremsen zugeordnete zusätzliche Bremsdruckregler, z.B. verzögerungsabhängige Bremskraftregler, retardermomentabhängige Bremskraftregler, aufweisen.

In Ausführungsformen, in denen die Bremskräfte bzw. Bremsmomente der Radbremsen bzw. die Radbremstemperaturen an beiden Seiten einer oder mehrerer Achsen des Kraftfahrzeugs und/oder des Anhängers gegenseitig angeglichen werden sollen, ist auch die Verwendung bekannter lastabhängiger Bremskraftregler (ALB) möglich.

Die Erfindung kann gegenüber den genannten zusätzlichen Bremskraftreglern mit einer Vorrangschaltung für Teilbremsungen ausgebildet sein. Da sich der überwiegende Teil aller Bremsbetätigungen im Teilbremsbereich abspielt, können auf diese Weise die Vorteile der Erfindung zur Wirkung gebracht werden, ohne die Gesamtauslegung der Bremsanlage nachteilig zu berühren.

Die Erfindung schlägt in einer Ausgestaltung die Sensierung der Bremskräfte bzw. Bremsmomente wenigstens zweier Radbremsen vor, wobei die Sensoren in vorteilhafter Weise als die bremskraft- oder bremsmomentbedingte Verformung von Bauteilen, beispielsweise des Achskörpers, sensierende Verformungssensoren ausgebildet sein können.

In einer anderen Ausgestaltung schlägt die Erfindung die Sensierung der Temperaturen wenigstens zweier Radbremsen vor. Diese Ausgestaltung läßt sich vorteilhaft realisieren, wenn die Radbremsen in bekannter Weise als Trommel- oder Scheibenbremsen ausgebildet sind und der Temperatursensor in dem Bremsbelagträger und/oder dem Bremsbelag angeordnet ist. Der Temperatursensor könnte dabei an dem Bremsbelagträger oder Bremsbelag an einer geeigneten Stelle und in einem geeigneten Abstand von der Reibfläche angeordnet sein, derart, daß sich ein beanspruchungsproportionales Temperatursignal ergibt.

Bei der eben erwähnten Temperatursensoranordnung kann es auch vorteilhaft sein, mehrere Temperatursensoren auf dem Umfang und/oder der Breite des Bremsbelags verteilt anzuordnen und als Temperatursignal den Mittelwert (arithmetisch oder gewichtet) der Signale der einzelnen Temperatursensoren heranzuziehen.

Vorteilhaft wäre auch, die Bremstrommel- bzw. Bremsscheibentemperatur zu sensieren, da hierbei durch die niedrige Wärmeleitfähigkeit des Bremsbelagwerkstoffes entstehende Verzerrungen und Verzögerungen ausgeschaltet und eine höhere Genauigkeit erreicht werden.

Die Erfindung ermöglicht, daß Giermomente ganz oder weitgehend vermieden werden, womit die Richtungsstabilität des Kraftfahrzeugs und/oder des Anhängers und/oder der Fahrzeugkombination verbessert wird. Die Erfindung stellt gleichzeitig einen gleichen Verschleiß zwischen den Radbremsen sicher.

Die Erfindung bietet auch eine Lösung für einen lastabhängigen Bremskraftregler. In diesem Fall werden die Druckregelventile von der Steuerelektronik zur Anpassung der von den Radbremsen erzeugten Bremskräfte bzw. Bremsmomente bzw. der Radbremstemperaturen an eine vorgegebene Achslastverteilung gesteuert. Dazu werden von der Steuerelektronik ihr zusätzlich über Lastsensoren zugeführte Achslastsignale nach einem vorbestimmten Programm in Steuersignale für die Druckregelventile ungesetzt.

Die Erfindung ermöglicht auch, die Druckregelventile bis zu einem vorbestimmten Schwellwert der auf die Bremsauslöseeinrichtung wirkenden Betätigungskraft bzw. ihres Betätigungsweges bzw. des von ihr gesteuerten bzw. gelieferten Druckes zur gegenseitigen Angleichung der von den Radbremsen erzeugten Bremskräfte bzw. Bremsmomente bzw. der Radbremstemperaturen und bei Werten oberhalb des genannten Schwellwertes zur Anpassung der Bremskräfte bzw. der Bremsmomente bzw. der Radbremstemperaturen an die vorgegebene Achslastverteilung zu steuern.

Mit der zuletzt erwähnten Möglichkeit wird der Erkenntnis Rechnung getragen, daß es in gewissen Fällen vorteilhaft ist, nicht nur die Radbremsbeanspruchung allein bei der Steuerung der Druckregelventile zu berücksichtigen, sondern auch die Bremskraftverteilung zwischen Achsen bzw. den Bestandteilen der Fahrzeugkombination. Mit dieser Lösung wird erreicht, daß bei der überwiegenden Zahl aller Bremsbetätigungen, die sich im Teilbremsbereich abspielen, eine gleiche Beanspruchung der Radbremsen und im oberen Brems- bzw. Bremsdruckbereich, der für die Bremssicherheit erhöhte Bedeutung hat, die Bremskraftverteilung der Achslastverteilung angepaßt wird.

Auch eine Kombination aller beschriebenen Ausführungsformen ist möglich, etwa in der Form gleichzeitiger gegenseitiger Angleichung der Radbremsen von zwei Fahrzeugseiten einer Achse und lastabhängiger Anpassung der so gegenseitig angeglichenen Radbremsen an (ebenfalls gegenseitig angeglichene) Radbremsen einer anderen Achse.

Als weitere Vorteile bietet die Erfindung eine gleichmäßige oder gleichmäßigere Beanspruchung der Radbremsen und gleichzeitig einen gleichen Verschleiß zwischen den Radbremsen. Diese Vorteile führen zu einer Steigerung der Wirtschaftlichkeit des Fahrzeugbetriebes.

Die Erfindung ist mit jeder bekannten Art Bremsauslöseeinrichtung durchführbar, insbesondere mit Motorwagenbremsventil oder mit elektrischer Bremsdrucksteuerung (EBS).

Im Falle einer EBS ist ein hand- oder fußbetätigter Bremsgeber vorgesehen, der ein betätigungskraft- oder betätigungswegabhängiges Ausgangssignal (Bremssignal) als Sollwertvorgabe für einen Druckmodulator liefert.

Im Falle einer EBS ist wenigstens im Kraftfahrzeug , vorzugsweise aber für jede Achse oder Radbremse,ein Druckmodulator vorgesehen, der aus einer zugeordneten Druckmittelquelle einen von der Stärke des Bremssignals abhängigen Bremsdruck aussteuert. Der bzw. die Druckmodulatoren gehören also zur Bremsauslöseeinrichtung.

Im Falle einer Fahrzeugkombination kann die Bremsauslöseinrichtung zur Mitsteuerung des Bremsdrucks zu den Radbremsen des Anhängers ein Anhängersteuerventil oder eine Druckmittel- oder eine elektrische Steuerleitung zur Anhängerbremsanlage aufweisen.

In den Ausführungsformen mit Motorwagenbremsventil und EBS sind die Druckregelventile zwischen den Radbremsen und dem Motorwagenbremsventil bzw. den Druckmodulatoren angeordnet. Im letzteren Fall können die Druckmodulatoren mit den Druckregelventilen zu Kombi-Modulatoren vereinigt sein.

In einer bevorzugten Ausführungsform weisen die Druckregelventile eine Durchgangsstellung, eine Sperrstellung und eine Druckabbaustellung auf. Sie sind damit zugleich als ABS-Ventile für eine Antiblockiereinrichtung (ABS) geeignet. Die Erfindung läßt sich deshalb vorteilhaft in ein Kraftfahrzeug und/oder einem Anhänger und/oder einer Fahrzeugkombination realisieren, welche eine ABS aufweisen, in welchem Falle die ABS gegenüber der Erfindung eine Vorrangschaltung haben muß.

In einer Ausführungsform ist der Steuerelektronik eine Speichereinrichtung zugeordnet, die dazu dient, verschiedenen Bremskraft- bzw. Bremsmoment-Parametern (im folgenden zusammengefaßt Bremswert-Parameter) bzw. Temperatur-Parametern, insbesondere als Datenkennfeld, Steuersignale für die Ansteuerung der Druckregelventile zuzuordnen.

In einer bevorzugten Ausführungsform sind die Steuersignale dazu bestimmt, von der Steuerelektronik durch Ansteuerung der Druckregelventile in entsprechende Bremsdruck-Unterschiede umgesetzt zu werden.

In einer Ausführungsform der Erfindung ist die Steuerelektronik derart ausgebildet, daß sie die Bremswertsignale bzw. die Temperatursignale während einer Bremsbetätigung zu einem vorbestimmten Zeitpunkt nach Beginn derselben abfragt, dabei den zugeordneten Bremswert- bzw. Temperatur-Parameter ermittelt und nach dem diesem zugeordneten Steuersignal die Bremsdruck-Unterschiede steuert. In dieser Ausführungsform kann die Aufnahme der genannten Signale im Verlauf der Bremsbetätigung zu ebenfalls vorbestimmten Zeitpunkten ein- oder mehrmals wiederholt und die Einstellung der Bremsdruck-Unterschiede entsprechend korrigiert werden. Da die zu dem bzw. den Zeitpunkten der Signalaufnahme vorhandenen Signale, insbesondere die Temperatursignale, unter Umständen auch von der Betätigungsgeschwindigkeit der Bremsauslöseeinrichtung abhängen, kann die Erfindung auch so ausgeführt werden, daß der Steuerelektronik und/oder der Speichereinrichtung die genannte Betätigungsgeschwindigkeit als Parameter eingespeichert ist. Auch der Ausgangswert der Radbremstemperatur bei Beginn der Bremsbetätigung kann als Parameter eingespeichert sein.

In einer Ausführungsform sind die Steuerelektronik und/oder die Speichereinrichtung derart ausgebildet, daß sie aus in der Vergangenheit zugeführten Bremswert-bzw. Temperatursignalen die Steuersignale für die Druckregelventile bilden. In diesem Falle sind die Steuerelektronik und/oder die Speichereinrichtung derart ausgebildet, daß sie aus bei einer oder mehreren früheren Bremsbetätigungen zugeführten Bremswert- bzw. Temperatursignalen einen Bremsdruckkorrekturwert bzw. dessen Kennfeld errechnen und speichern, wobei die Steuerelektronik bei einer Bremsbetätigung die Bremsdrücke nach dem jeweiligen Bremsdruckkorrekturwert durch Steuerung der Druckregelventile steuert. In diesem Falle können die Steuerelektronik und/oder die Speichereinrichtung derart ausgebildet sein,daß sie den Bremsdruckkorrekturwert bzw. sein Kennfeld bzw. die Steuersignale laufend, d.h. anhand der bei der Bremsbetätigung zugeführten Bremswert- und/oder Temperatursignale aktualisieren.

In einer Ausführungsform werden die den Radbremsen zugeführten Bremsdrücke auf Einhaltung der durch die Steuersignale definierten Vorgaben (Bremsdruck-Unterschiede) überwacht. In dieser Ausführungsform ist den jeweils einem Druckregelventil zugeordneten Radbremsen jeweils ein Drucksensor zur Erfassung der den Radbremsen von den Druckregelventilen zugeführten Bremsdrücke zugeordnet, dessen bremsdruckabhängiges Ausgangssignal (Bremsdrucksignal) der Steuerelektronik und/oder der Speichereinrichtung zum Zwecke der genannten Überwachung zugeführt wird.

Eine gewisse Ausführungsform der als EBS ausgebildeten Bremsauslöseeinrichtung setzt digital angesteuerte Druckmodulatoren ein, die zur bremssignalabhängigen Steuerung des Bremsdruckes eines Bremsdrucksensors der eben erwähnten Art bedürfen. In diesem Fall läßt sich in vorteilhafter Weise die beschriebene Bremsdrucküberwachung ohne Mehraufwand unter Heranziehung der Bremsdrucksensoren der Druckmodulatoren ausführen.

Die Erfindung kann oberhalb eines vorbestimmten Wertes der Betätigungskraft oder des Betätigungswegs der Bremsenauslöseeinrichtung oder des von dieser gesteuerten bzw. gelieferten Bremsdrucks abgeschaltet werden, wobei dieser Wert insbesondere den Fall einer Notbremsung repräsentieren kann. Auf diese Weise stünde die Erfindung einer Ausnutzung des vollen im Kraftfahrzeug bzw. in der Fahrzeugkombination zur Verfügung stehenden Bremskraft- bzw. Bremsmomentenpotentiales nicht im Wege.

In vorteilhafter Weise können die Steuerelektronik oder Teile davon, soweit vorhanden, mit den Bremswertsensoren, den Temperatursensoren, den Druckregelventilen, dem Bremsgeber, den Druckmodulatoren, der Druckregeleinrichtung, ABS, ALB, verzögerungsabhängigen bzw. retardermomentabhängigen Bremskraftregler oder Teilen aller dieser Komponenten baulich oder elektrisch vereinigt sein.

Die Erfindung wird nachstehend anhand eines in der Zeichnung dargestellten Ausführungsbeispiels erläutert.

Die Zeichnung zeigt schematisch die Bremsanlage einer Fahrzeugkombination mit als EBS ausgebildeter Bremsauslöseeinrichtung.

In der Zeichnung bedeuten durchgehend gezeichnete Leitungen Druckmittelleitungen und strichpunktiert gezeichnete Linien elektrische Leitungen bzw. Verbindungen. Als Fahrzeugseitenindizes werden "a" für die rechte, "b" für die linke Fahrzeugseite verwendet.

Mit 2a, 2b,9a, 9b, 14a, 14b, 20a, 20b sind durch den jeweils zugeordneten druckmittelbeaufschlagbaren Bremszylinder angedeutete Radeinheiten bezeichnet, die ein oder mehrere Räder einschließlich ihrer Aufhängung als Tragelement und eine Trommel- oder Scheibenbremse einschließlich des oder der zugeordneten Bremszylinder(s) als Radbremse aufweisen.

Die jeweils mit der gleichen Ziffer bezeichneten, in bekannter Weise aufgebauten und deshalb nicht näher beschriebenen Radeinheiten bilden Achsen I, II, III, IV, wobei die Achsen I bzw. II eine Vorderachse bzw. eine Hinterachse eines Kraftfahrzeugs und die Achsen III bzw. IV eine Vorderachse bzw. eine Hinterachse eines Anhängers sind. Insgesamt gesehen stellen die Achsen I bis IV die Achsen einer Fahrzeugkombination dar, wobei I und/oder II als deren Vorderachse (n) und III und/oder IV als deren Hinterachse(n) anzusehen sind.

Den Radbremsen sind Sensoreinrichtungen zugeordnet, derart, daß die Sensoreinrichtungen 1a, 1b den Radbremsen der Achse I und die Sensoreinrichtungen 10a, 10b bzw. 13 a, 13b bzw. 21 a, 21b jeweils den Radbremsen der Achsen II bzw. III bzw. IV zugeordnet sind. Die einzelne Sensoreinrichtung kann als Bremswertsensoreinrichtung die bei einer Bremsbetätigung von der jeweils zugeordneten Radbremse erzeugte Bremskraft bzw. deren Bremsmoment erfassen, in welchem Falle sie Bremswertsignale abgibt. In einer anderen Ausgestaltung kann die einzelne Sensoreinrichtung als Temperatursensoreinrichtung die bei der Bremsbetätigung entstehende bzw. entstandene Temperatur der zugeordneten Radbremse (Radbremstemperatur) erfassen, in welchem Falle sie Temperatursignale abgibt. Hinsichtlich der Einzelheiten der Ausbildung als Bremswertsensoreinrichtung bzw. Temperatursensoreinrichtung wird auf die weiter vorn gemachten Ausführungen verwiesen. Die einzelne Sensoreinrichtung kann aber auch als kombinierte Bremswert- und/oder Temperatursensoreinrichtung ausgebildet sein.

Die dargestellte Bremsanlage weist eine Bremsauslöseeinrichtung auf, die aus einem Bremsgeber 11 und Teilen 4, 5 von Kombi-Druckmodulatoren 6a, 6b, 7a, 7b für das Kraftfahrzeug sowie einem Anhängersteuerventil 12 und einem Anhängerbremsventil 15 für den Anhänger besteht.

Der Bremsgeber liefert ein elektrisches Ausgangssignal (Bremssignal), welches von der auf sein Stellglied ausgeübten Betätigungskraft oder von dem Betätigungsweg des Stellglieds abhängig ist.

Jeder der bereits erwähnten, jeweils einer Radbremse der Achsen I bzw. II, also des Kraftfahrzeugs, zugeordneten und magnetbetätigten Kombi-Druckmodulatoren 6a, 6b, 7a, 7b vereinigt in sich die Funktionen eines Druckmodulators und eines Druckregelventils. Am Beispiel des Kombi-Druckmodulators 6a werden Einzelheiten beschrieben, die für die anderen Druckmodulatoren entsprechend gelten. Der Teil 5 des Druckmodulators 6a steuert aus einer oder mehreren nicht dargestellten Druckmittelquellen einen Bremsdruck aus, dessen Höhe von der Stärke des seinen Magnet oder seine Magnete aktivierenden Bremssignals abhängt. Mit einem weiteren, durch 4 gekennzeichneten Teil übt der Kombi-Druckmodulator 6a die Funktionen des Druckregelventils aus. Das Druckregelventil 4 ist durch entsprechende Aktivierung eines nicht dargestellten eigenen Magneten oder des oder der Magneten des Kombi-Druckmodulators 6a in eine Durchgangsstellung oder eine Sperrstellung oder eine Druckabbaustellung stellbar. In der Durchgangsstellung sind Anströmung und Abströmung des Druckregelventils 4 miteinander verbunden. In der Sperrstellung ist die Verbindung zwischen Anströmung und Abströmung gesperrt. In der Druckabbaustellung ist die Verbindung zwischen Anströmung und Abströmung ebenfalls gesperrt und zusätzlich die Abströmung mit einem Druckentlastungsanschluß, d.h. im Falle einer pneumatischen Bremsanlage mit der Atmosphäre, verbunden. Konstruktiv kann der Kombi-Druckmodulator 6a als Druckmodulator mit im gleichen Gehäuse angeordneten nachgeschaltetern Druckregelventil oder mit vollintegrierten Funktionen ausgebildet sein. Es liegt auf der Hand, daß anstelle des Kombi-Druckmodulators 6a auch ein Druckmodulator und ein nachgeschaltetes getrenntes Druckregelventil eingesetzt werden können.

Die Kombi-Druckmodulatoren 6a, 6b, 7a, 7b sind achsweise anströmseitig mit unterschiedlichen nicht dargestellten Druckquellen verbunden. Der Bremsgeber 11 weist zwei elektrische Kreise auf. Der oder die Magnete jedes Kombi-Druckmodulators können von jedem dieser elektrischen Kreise angesteuert werden, so daß die Bremsanlage des Kraftfahrzeugs zwei elektrische Steuerkreise und zwei Druckmittelkreise aufweist.

Das zur Bremsauslöseeinrichtung gehörende Anhängersteuerventil 12 wird von den Bremssignalen beider Kreise des Bremsgebers 11 elektrisch angesteuert. Das Anhängersteuerventil steht in bekannter Weise über eine Druckmittel-Steuerleitung mit dem in bekannter Weise aufgebauten und deshalb nicht näher beschriebenen Anhängerbremsventil 15 in Verbindung.

Die Radbremsen desKraftfahrzeugs stehen mit der Abströmseite des jeweils zugeordneten Kombi-Druckmodulators 6a, 6b, 7a, 7b in Verbindung.

In den Druckmittelverbindungen zwischen dem Anhängerbremsventil 15 und den Radbremsen der Achsen III, IV des Anhängers sind, der jeweils zugeordneten Radbremse vorgeschaltet, elektrisch steuerbare Druckregelventile 17a, 17b, 18a, 18b angeordnet. Diese weisen die bei dem Druckregelventil 4 des Kombi-Druckmodulators 6a beschriebenen Funktionsmerkmale auf.

Mit 3a, 3b, 8a, 8b, 16a, 16b, 19a, 19b sind jeweils einer Radbremse zugeordnete Bremsdrucksensoren bezeichnet.

Mit 24 ist ein der Achse II, mit 22 ist ein der Achse IV zugeordneter Achslastsensor bezeichnet.

Das Bremssignal des Bremsgebers 11 sowie die Signale sämtlicher erwähnten Sensoreinrichtungen und Sensoren werden einer Steuerelektronik 23 zugeführt, welche ausgangsseitig mit den Betätigungsmagneten der Kombi-Druckmodulatoren 6a, 6b, 7a, 7b und der Druckregelventile 17a, 17b, 18a, 18b verbunden ist. Die Steuereinrichtung 23 enthält eine Speichereinrichtung und die zur Durchführung der nachstehend beschriebenen Funktionen erforderlichen Vergleichs- und/oder Rechnereinrichtungen. Die Steuerelektronik 23 kann darüberhinaus, gegebenenfalls in Verbindung mit nicht dargestellten erforderlichen Sensoren weiterer Einrichtungen wie ABS, Retardersteuerung, radschlupfabhängige Vortriebsregelung, retardermomentabhängigen Bremskraftregler und dergleichen enthalten. Von diesen muß die ABS gegenüber der Erfindung eine Vorrangschaltung aufweisen. Abweichend von der zeichnerischen Darstellung können die in die Steuerelektronik integrierten vorstehend erwähnten Einrichtungen auch in diskreter Bauweise ausgebildet sein.

Die erwähnte, in der Steuerelektronik 23 enthaltene Speichereinrichtung enthält als Datenkennfeld eine Zuordnung von Signalen der Sensoreinrichtungen 1a, 1b, 10a, 10b, 13a, 13b, 21a, 21b sowie der Achslastsensoren 22 und 24 und Steuersignalen für die Ansteuerung der Kombi-Druckmodulatoren 6a, 6b, 7a, 7b und der Druckregelventile 17a, 17b, 21a, 21b. Die Steuerelektronik 23 ist in nicht näher beschriebener Weise derart ausgebildet, daß sie bei einer Bremsbetätigung zu einem vorbestimmten Zeitpunkt nach deren Beginn die Sensoreinrichtungen 1a, 1b, 10a, 10b, 13a, 13b, 21a, 21b abfragt und anhand der bei der Abfrage gewonnenen Signale dem genannten Datenkennfeld Steuersignale für die Ansteuerung der Kombi-Druckmodulatoren im Kraftfahrzeug und der Druckregelventile im Anhänger entnimmt.

Die Betätigung der dargestellten Bremsanlage seitens des Fahrzeugführers erfolgt durch eine Kraft auf des bzw. durch eine Verschiebung des Stellorgan(s) des Bremsgebers 11. Dieser gibt daraufhin ein in seiner Stärke von der Betätigungskraft bzw. dem Betätigungsweg abhängiges Bremssignal an die Steuerelektronik 23 ab. Nach Aufbereitung des Bremssignals gibt die Steuerelektronik 23 Steuersignale an die Kombi-Druckmodulatoren der Achsen I, II und an das Anhängersteuerventil 12 ab. Letzteres setzt das zugeführte Bremssignal in einen Steuerdruck für die Ansteuerung des Anhängerbremsventils 15 um, welches seinerseits zu den Radbremsen der Achsen III, IV aus einer nicht dargestellten Druckquelle einen dem Steuerdruck entsprechenden Druck aussteuert. Dieser Druck wird, bevor er den Radbremsen als Bremsdruck zuströmt, von der Steuerelektronik 23 mittels der Druckregelventile 17a, 17b, 18a, 18b nach Maßgabe der aus dem genannten Datenkennfeld kommenden Steuersignale für die dem jeweiligen Druckregelventil zugeordnete Radbremse modifiziert, soweit sich aus den erwähnten Steuersignalen eine Druckmodifikation ergibt.

Den Radbremsen des Kraftfahrzeugs wird der Bremsdruck über den jeweils zugeordneten Kombi-Druckmodulator zugeführt. Die Steuerelektronik 23 steuert die Kombi-Druckmodulatoren dabei gleichzeitig nach Maßgabe des von dem Bremsgeber 11 abgegebenen Bremssignals und der aus dem genannten Datenkennfeld gewonnenen Steuersignale. Die Kombi-Druckmodulatoren des Ausführungsbeispiels wirken digital. Mit Hilfe der von den den Kombi-Druck-Modulatoren zugeordneten Bremsdrucksensoren gewonnenen Bremsdrucksignale steuert die Steuerelektronik 23 die Kombi-Druckmodulatoren im Sinne eines analogen Bremsdruckaufbaus in den Radbremsen.

Das erwähnte, in der Speichereinrichtung enthaltene Datenkennfeld berücksichtigt für die Steuersignale der Kombi-Druckmodulatoren der Achse II und der Druckregelventile der Achse IV auch die Achslastsignale der Achslastsensoren 24 bzw. 22.

Durch das Zusammenwirken der Einrichtungen der Bremsanlage in der vorstehend beschriebenen Weise ist es möglich, die Radbremsen jeder Achse I bis IV in bezug auf die von ihnen erzeugten Bremskräfte bzw. Bremsmomente und/oder auf die in ihnen entstehenden Radbremstemperaturen gegenseitig anzugleichen. Damit werden in erster Linie Giermomente vermieden und damit die Richtungsstabilität der Einzelfahrzeuge bzw. der Fahrzeugkombination bei der Bremsbetätigung verbessert. Gleichzeitig wird eine gleichmäßige Radbremsbeanspruchung erzielt. In dieser Ausführungsform können die Radbremsen achsweise in bekannter Weise durch zusätzliche Einrichtungen (ALB) lastabhängig gesteuert sein.

Durch das beschriebene Zusammenwirken ist es aber auch möglich, Radbremsen verschiedener Achsen einzeln oder achsweise oder die Radbremsen des Kraftfahrzeugs mit den Radbremsen des Anhängers bezüglich der genannten Kriterien gegenseitig anzugleichen.

Die Einbeziehung der von den Achslastsensoren 22,24 gelieferten Achslastsignale ermöglicht aber auch eine achsweise Anpassung der Bremskräfte bzw. Bremsmomente und/oder Radbremstemperaturen und damit eine der Achslastverteilung entsprechenden Bremskraftverteilung.

Die Steuerelektronik 23 ist darüberhinaus so ausgebildet, daß sie die erfindungsgemäße Funktion abschaltet, wenn das von dem Bremsgeber 11 zugeführte Bremssignal einen vorbestimmten Wert überschreitet. Dieser Wert ist so gewählt, daß er den Fall einer Notbremsbetätigung signalisiert. Auf diese Weise ist sichergestellt, daß im Notfalle durch die Erfindung keine Bremskraftverluste hervorgerufen werden.

Die Steuerelektronik 23 ist im Ausführungsbeispiel außerdem derart ausgebildet, daß sie anhand der von den Bremsdrucksensoren 3a, 3b, 8a, 8b, 16a, 16b, 19a, 19b abgegebenen Bremsdrucksignale die Einhaltung der durch die Steuersignale definierten Vorgaben (Bremsdruck-Unterschiede) überwacht.

In für den Fachmann ersichtlicher Weise läßt sich das Ausführungsbeispiel mit einfachen Mitteln auf ein solches mit einer rein auf Druckmittelbasis funktionierenden Bremsauslöseeinrichtung umstellen. Zu diesem Zweck brauchen lediglich der Bremsgeber 11 in Verbindung mit den Druckmodulatoren 5 der Kombi-Druckmodulatoren durch ein in bekannter Weise wirkendes Bremsventil und das Anhängersteuerventil 12 durch ein druckmittelgesteuertes ersetzt zu werden. In diesem Fall würden die Druckregelventile 4 der dann nicht mehr vorhandenen Kombi-Druckmodulatoren zusammen mit dem Bremsventil wie in der Darstellung die Druckregelventile 17a bis 19b zusammen mit dem Anhängerbremsventil 15 wirken.

Obwohl das Ausführungsbeispiel sich nur auf eine Betriebsbremsanlage bezieht, läßt sich die Erfindung auch für eine Hilfsbrems- und/oder eine Feststellbremsanlage oder unter Einbeziehung derartiger Anlagen in die Betriebsbremsanlage realisieren.

Sofern eine Fahrzeugkombination oder ihre Bestandteile mehr Achsen oder mehr Radbremsen pro Achse als im Ausführungsbeispiel dargestellt, aufweisen, gelten die vorstehenden Ausführungen für diese entsprechend.

Es liegt auf der Hand, daß diejenigen weiter vorn gemachten Ausführungen, die in der vorstehenden Figurenbeschreibung nicht erwähnt wurden, für das dargestellte Ausführungsbeispiel in entsprechender Weise gelten.

Ferner ist für den Fachmann offenkundig, daß die vorstehenden Ausführungen den Anwendungsbereich der Erfindung nicht erschöpfend beschreiben. Insbesondere gelten alle Ausführungen für ein Kraftfahrzeug oder einen Anhänger als Einzelfahrzeuge in entsprechender Weise.

Statt der Bremsdrücke als Zuspannkraft kann auch elektrische Energie verwendet werden. Diese ist dann entsprechend der Erfindung analog einzusetzen.

## Patentansprüche

1. Bremsdrucksteuereinrichtung für ein Kraftfahrzeug und/ oder wenigstens einen Anhänger, dessen Bremsanlage druckmittelbetätigte Radbremsen (2a, 2b, 9a, 9b, 14a, 14b, 20a, 20b) aufweist, deren Bremsdrücke wenigstens über eine willkürlich betätigbare Bremsauslöseeinrichtung (11 5, 12, 15) gesteuert werden,
mit den Merkmalen:
a) wenigstens zwei Radbremsen ist jeweils mindestens ein elektrisch steuerbares Druckregelventil (4, 17a, 17b, 18a, 18b) vorgeschaltet;
b) die Bremsauslöseeinrichtung (5, 11, 12, 15) ist den Druckregelventilen (4, 17a, 17b, 18a, 18b) ansteuerseitig bzw. anströmseitig vorgeschaltet;
c) es ist eine Steuerelektronik (23) vorgesehen, die Ausgangssignale von Sensoreinrichtungen zu Steuersignalen für die Druckregelventile (4, 17a, 17b, 18a, 18b) verarbeitet,
d) den jeweils einem Druckregelventil (4, 17a, 17b, 18a, 18b) zugeordneten Radbremsen ist eine Sensoreinrichtung (1a, 1b, 10a, 10b, 13a, 13b, 21a, 21b) zugeordnet;
gekennzeichnet durch die Merkmale:
e) die Sensoreinrichtungen bestehen aus Bremswertsensoreinrichtungen (1a, 1b, 10a, 10b, 13a, 13b, 21a, 21b) zur Erfassung der Bremskraft bzw. des Bremsmoments, im folgenden mit dem Sammelbegriff Bremswert bezeichnet;
f) die Steuerelektronik (23) ist so ausgebildet, daß sie die Druckregelventile (4, 17a, 17b, 18a, 18b) derart ansteuert, daß die von den Druckregelventilen (4, 17a, 17b, 18a, 18b) den Radbremsen (2a, 2b, 9a, 9b, 14a, 14b, 20a, 20b) zugeführten Bremsdrücke zur gegenseitigen Anpassung der von den Radbremsen (2a, 2b, 9a, 9b, 14a, 14b, 20a, 20b) erzeugten Bremswerte in Abhängigkeit von einem Bremswert-Parameter steuerbar sind, der seinerseits wesentlich von dem Unterschied der Bremswerte bestimmt ist.

2. Bremsdrucksteuereinrichtung für ein Kraftfahrzeug und/ oder wenigstens einen Anhänger, dessen Bremsanlage druckmittelbetätigte Radbremsen (2a, 2b, 9a, 9b, 14a, 14b, 20a, 20b) aufweist, deren Bremsdrücke wenigstens über eine willkürlich betätigbare Bremslöseeinrichtung (11, 5, 12, 15) gesteuert werden,
mit den Merkmalen:
a) wenigstens zwei Radbremsen ist jeweils mindestens ein elektrisch steuerbares Druckregelventil (4, 17a, 17b, 18a, 18b) vorgeschaltet;
b) die Bremsauslöseeinrichtung (5, 11, 12, 15) ist den Druckregelventilen (4, 17a, 17b, 18a, 18b) ansteuerseitig bzw. anströmseitig vorgeschaltet;
c) es ist eine Steuerelektronik (23) vorgesehen, die Ausgangssignale von Sensoreinrichtungen zu Steuersignalen für die Druckregelventile (4, 17a, 17b, 18a, 18b) verarbeitet,
d) den jeweils einem Druckregelventil (4, 17a, 17b, 18a, 18b) zugeordneten Radbremsen ist eine Sensoreinrichtung (1a, 1b, 10a, 10b, 13a, 13b, 21a, 21b) zugeordnet;
gekennzeichnet durch die Merkmale:
e) die Sensoreinrichtungen bestehen aus Temperatursensoreinrichtungen (1a, 1b, 10a, 10b, 13a, 13b, 21a, 21b) zur Erfassung der Radbremstemperatur;
f) die Steuerelektronik (23) ist so ausgebildet, daß sie die Druckregelventile (4, 17a, 17b, 18a, 18b) derart ansteuert, daß die von den Druckregelventilen (4, 17a, 17b, 18a, 18b) den Radbremsen (2a, 2b, 9a, 9b, 14a, 14b, 20a, 20b) zugeführten Bremsdrücke zur gegenseitigen Anpassung der von den Radbremsen (2a, 2b, 9a, 9b, 14a, 14b, 20a, 20b) erzeugten Radbremstemperaturen in Abhängigkeit von einem Temperatur-Parameter steuerbar sind, der seinerseits wesentlich von dem Unterschied der Radbremstemperaturen bestimmt ist.

3. Bremsdrucksteuereinrichtung nach einem der Ansprüche 1 oder 2,
gekennzeichnet durch:
die Druckregelventile ( 4, 17a, 17b, 18a, 18b) sind von der Steuerelektronik (23) zur gegenseitigen Angleichung der von den Radbremsen (2a,2b, 9a, 9b, 14a, 14b, 20a, 20b) erzeugten Bremswerte bzw. der Radbremstemperaturen ansteuerbar.

4. Bremsdrucksteuereinrichtung nach einem der Ansprüche 1 oder 2,
gekennzeichnet durch:
die Druckregelventile (4, 17a, 17b, 18a, 18b) sind von der Steuerelektronik (23) zur Anpassung der von den Radbremsen erzeugten Bremswerte bzw. der Radbremstemperaturen an eine vorgegebene Achslastverteilung steuerbar.

5. Bremsdrucksteuereinrichtung nach Anspruch 3 und Anspruch 4,
gekennzeichnet durch:
die Druckregelventile sind bis zu einem vorbestimmten Schwellwert des von der Bremsauslöseeinrichtung gesteuerten bzw. gelieferten Druckes bzw. ihrer Betätigungskraft bzw. ihres Betätigungsweges zur gegenseitigen Angleichung der von den Radbremsen erzeugten Bremswerte bzw. der Radbremstemperaturen und bei Werten oberhalb des genannten Schwellwertes zur Anpassung der Bremswerte bzw. der Radbremstemperaturen an die vorgegebene Achslastverteilung steuerbar.

6. Bremsdrucksteuereinrichtung nach einem der vorhergehenden Ansprüche,
gekennzeichnet durch:
der Steuerelektronik (23) ist eine Speichereinrichtung zugeordnet, die dazu dient, verschiedenen Bremswert- bzw. Temperatur-Parametern, insbesondere als Datenkennfeld, Steuersignale für die Ansteuerung der Druckregelventile zuzuordnen.

7. Bremsdrucksteuereinrichtung nach Anspruch 6,
gekennzeichnet durch:
die Steuersignale sind dazu bestimmt, von der Steuerelektronik (23) durch Ansteuerung der Druckregelventile (4, 17a, 17b, 18a, 18b) in entsprechende Bremsdruck-Unterschiede umgesetzt zu werden.

8. Bremsdrucksteuereinrichtung nach Anspruch 7,
gekennzeichnet durch:
die Steuerelektronik (23) ist derart ausgebildet, daß sie die Bremswertsignale bzw. die Temperatursignale zu einem vorbestimmten Zeitpunkt nach Beginn einer Bremsbetätigung abfragt, dabei den Bremswert- bzw. Temperatur-Parameter ermittelt und nach den diesem zugeordneten Steuersignalen die Bremsdruck-Unterschiede steuert.

9. Bremsdrucksteuereinrichtung nach einem der Ansprüche 6 bis 8,
gekennzeichnet durch:
die Steuerelektronik (23) und/oder die Speichereinrichtung sind derart ausgebildet, daß sie aus bei einer oder mehreren früheren Bremsbetätigungen zugeführten Bremswert- bzw. Temperatursignalen einen Bremsdruckkorrekturwert bzw. dessen Kennfeld errechnen und speichern, wobei die Steuerelektronik bei einer Bremsbetätigung die Bremsdrücke nach dem jeweiligen Bremsdruckkorrekturwert durch Steuerung der Druckregelventile (4, 17a, 17b, 18a, 18b) steuert.

10. Bremsdrucksteuereinrichtung nach einem der Ansprüche 6 bis 9,
gekennzeichnet durch:
die Steuerelektronik (23) und/oder die Speichereinrichtung sind derart ausgebildet, daß sie den Bremsdruckkorrekturwert bzw. sein Kennfeld bzw. die Steuersignale anhand der bei der Bremsbetätigung zugeführten Bremswert- und/oder Temperatursignale aktualisieren.

11. Bremsdrucksteuereinrichtung nach einem der Ansprüche 6 bis 10,
gekennzeichnet durch:
den jeweils einem Druckregelventil zugeordneten Radbremsen ist jeweils ein Drucksensor (3a, 3b, 8a, 8b, 16a, 16b, 19a, 19b) zur Erfassung der von den Druckregelventilen den Radbremsen zugeführten Bremsdrücke zugeordnet, dessen bremsdruckabhängiges Ausgangssignal als Bremsdrucksignal der Steuerelektronik (23) und/oder der Speichereinrichtung zur Überwachung der Bremsdrücke auf Einhaltung der durch die Steuersignale defninierten Vorgaben zugeführt wird.

12. Bremsdrucksteuereinrichtung nach Anspruch 11,
gekennzeichnet durch:
a) die Bremsauslöseeinrichtung (5, 11,12,15) ist als elektrische Bremssteuerung mit einem Bremsgeber (11) und mit, einen der Sollwertvorgabe des Bremsgebers entsprechenden Bremsdruck aussteuernden, Modulatoren (5) ausgebildet;
b) die Drucksensoren (3a,3b, 8a, 8b) dienen den jeweils zugeordneten Modulatoren (5) zum Vergleich des Ist-Bremsdruckes mit der Sollwertvorgabe des Bremsgebers (11).

13. Bremsdrucksteuereinrichtung nach einem der Ansprüche 1 bis 11,
gekennzeichnet durch:
die Bremsauslöseeinrichtung weist wenigstens ein Bremsventil auf, welches von wenigstens einer Druckmittelquelle betätigungsdruck- bzw. betätigungskraft- bzw. betätigungswegabhängigen Bremsdruck bzw. Bremssteuerdruck zu den Radbremsen aussteuert, wobei die Druckregelventile aus eine Durchgangsstellung, eine Sperrstellung und eine Druckabbaustellung aufweisenden ABS-Ventilen bestehen, die zur Bremswert- bzw. Temperaturanpassung bei der Bremsbetätigung oder beim Bremslösevorgang von der Steuerelektronik (23) im Sinne einer Rückhaltung des den jeweils zugeordneten Radbremsen zugeführten Bremsdruckes ansteuerbar sind.

## Claims

1. Brake pressure regulating device for a motor vehicle and/or at least one trailer, the braking system of which has pressure medium-actuated wheel brakes (2a, 2b, 9a, 9b, 14a, 14b, 20a, 20b), the brake pressures of which are controlled at least by way of a brake release device (11, 5, 12, 15) that can be actuated when required,
having the features:
a) upstream of at least two wheel brakes at least one electrically controllable pressure regulating valve (4, 17a, 17b, 18a, 18b) is provided in each case;
b) the brake release device (5, 11, 12, 15) is provided upstream of the pressure regulating valves (4, 17a, 17b, 18a, 18b) on the control side or flow side;
c) an electronic control system (23) is provided which processes output signals from sensor devices into control signals for the pressure regulating valves (4, 17a, 17b, 18a, 18b),
d) with the wheel brakes, each of which wheel brakes is associated with a pressure regulating valve (4, 17a, 17b, 18a, 18b), there is associated a sensor device (1a, 1b, 10a, 10b, 13a, 13b, 21a, 21b);
characterised by the features:
e) the sensor devices consist of braking value sensor devises (1a, 1b, 10a, 10b, 13a, 13b, 21a, 21b) for detecting the braking force or the braking moment, designated hereinafter by the collective term "braking value";
f) the electronic control system (23) is so constructed that it operates the pressure regulating valves (4, 17a, 17b, 18a, 18b) in such a way that the brake pressures fed by the pressure regulating valves (4, 17a, 17b, 18a, 18b) to the wheel brakes (2a, 2b, 9a, 9b, 14a, 14b, 20a, 20b) for the matching, one to another, of the braking values produced by the wheel brakes (2a, 2b, 9a, 9b, 14a, 14b, 20a, 20b) are controllable in response to a braking value parameter, which is in turn essentially determined by the difference between the braking values.

2. Brake pressure regulating device for a motor vehicle and/or at least one trailer, the braking system of which has pressure medium-actuated wheel brakes (2a, 2b, 9a, 9b, 14a, 14b, 20a, 20b), the brake pressures of which are controlled at least by way of a brake release device (11, 5, 12, 15) that can be actuated when required,
having the features:
a) upstream of at least two wheel brakes at least one electrically controllable pressure regulating valve (4, 17a, 17b, 18a, 18b) is provided in each case;
b) the brake release device (5, 11, 12, 15) is provided upstream of the pressure regulating valves (4, 17a, 17b, 18a, 18b) on the control side or flow side;
c) an electronic control system (23) is provided which processes output signals from sensor devices into control signals for the pressure regulating valves (4, 17a, 17b, 18a, 18b),
d) with the wheel brakes, each of which wheel brakes is associated with a pressure regulating valve (4, 17a, 17b, 18a, 18b), there is associated a sensor device (1a, 1b, 10a, 10b, 13a, 13b, 21a, 21b)
characterised by the features:
e) the sensor devices consist of temperature sensor devices (1a, 1b, 10a, 10b, 13a, 13b, 21a, 21b) for detecting the wheel brake temperature;
f) the electronic control system (23) is so constructed that it operates the pressure regulating valves (4, 17a, 17b, 18a, 18b) in such a way that the brake pressures fed by the pressure regulating valves (4, 17a, 17b, 18a, 18b) to the wheel brakes (2a, 2b, 9a, 9b, 14a, 14b, 20a, 20b) for the matching, one to another, of the wheel brake temperatures produced by the wheel brakes (2a, 2b, 9a, 9b, 14a, 14b, 20a, 20b) are controllable in response to a temperature parameter, which is in turn essentially determined by the difference between the wheel brake temperatures.

3. Brake pressure regulating device according to one of Claims 1 and 2,
characterised in that:
the pressure regulating valves (4, 17a, 17b, 18a, 18b) can be operated by the electronic control means (23) for the matching, one to another, of the braking values produced by the wheel brakes (2a, 2b, 9a, 9b, 14a, 14b, 20a, 20b) or of the wheel brake temperatures.

4. Brake pressure regulating device according to one of Claims 1 and 2,
characterised in that:
the pressure regulating valves (4, 17a, 17b, 18a, 18b) are controllable by the electronic control system (23) for adaptation of the braking values produced by the wheel brakes or of the wheel brake temperatures to a predetermined axle load distribution.

5. Brake pressure regulating device according to Claim 3 and Claim 4,
characterised in that:
the pressure regulating valves are controllable to a predetermined threshold value of the pressure controlled or delivered by the brake release device, or of its actuating force or of its actuating travel for the matching, one to another, of the braking values produced by the wheel brakes or of the wheel brake temperatures, and at values above the above-mentioned threshold value for adaptation of the braking values or of the wheel brake temperatures to the predetermined axle load distribution.

6. Brake pressure regulating device according to one of the preceding Claims,
characterised in that:
the electronic control system (23) has associated with it a store device which serves to assign to different braking value or temperature parameters, control signals for the operation of the pressure regulating valves, especially as a data characteristic field.

7. Brake pressure regulating device according to Claim 6,
characterised in that:
the control signals are intended to be converted into corresponding brake pressure differences by the electronic control system (23) by operation of the pressure regulating valves (4, 17a, 17b, 18a, 18b).

8. Brake pressure regulating device according to Claim 7,
characterised in that
the electronic control system (23) is so constructed that it scans the braking value signals or the temperature signals at a predetermined moment after the start of a brake actuation, ascertains the braking value or temperature parameter, and according to the control signals associated therewith controls the brake pressure differences.

9. Brake pressure regulating device according to one of Claims 6 to 8,
characterised in that:
the electronic control system (23) and/or the store device are so constructed that from braking value or temperature signals fed in during one or more earlier brake actuations they calculate and store a brake pressure correction value or its characteristic field, and the electronic control system, during a brake actuation, controls the brake pressures according to the current brake pressure correction value by controlling the pressure regulating valves (4, 17a, 17b, 18a, 18b).

10. Brake pressure regulating device according to one of Claims 6 to 9,
characterised in that:
the electronic control system (23) and/or the store device are so constructed that they update the brake pressure correction value or its characteristic field or the control signals with reference to the braking value signals and/or temperature signals fed in during the brake actuation.

11. Brake pressure regulating device according to one of Claims 6 to 10,
characterised in that:
with each of the wheel brakes associated in each case with a pressure regulating valve there is associated a pressure sensor (3a, 3b, 8a, 8b, 16a, 16b, 19a, 19b) for detecting the brake pressures fed by the pressure regulating valves to the wheel brakes, the brake pressure-controlled output signal of which pressure sensor is fed as a brake pressure signal to the electronic control system (23) and or the store device for monitoring the brake pressures so as to maintain the settings defined by the control signals.

12. Brake pressure regulating device according to Claim 11,
characterised in that:
a) the brake release device (5, 11, 12, 15) is in the form of an electrical brake control system with a brake sender (11) and with modulators (5) controlling a brake pressure corresponding to the nominal value setting of the brake sender;
b) the pressure sensors (3a, 3b, 8a, 8b) serve the modulators (5) associated therewith in each case, for comparison of the actual brake value with the nominal value setting of the brake sender (11).

13. Brake pressure regulating device according to one of Claims 1 to 11,
characterised in that:
the brake release device has at least one brake valve which from at least one pressure medium source supplies actuating pressure- or actuating force- or actuating travel-controlled brake pressure or brake regulating pressure to the wheel brakes, the pressure regulating valves consisting of ABS valves having a through position, a blocking position and a pressure reduction position which, for braking value or temperature adaptation during the brake actuation or during the brake release operation, can be operated by the electronic control system (23) in the direction of withholding of the brake pressure fed to the respective associated wheel brakes.

## Revendications

1. Dispositif de commande de la pression de freinage pour un véhicule à moteur et/ou au moins une remorque, dont l'installation de freinage présente des freins de roue (2a, 2b, 2a, 9b, 14a, 14b, 20a, 20b) qui sont manoeuvrés par un fluide sous pression et dont la pression de freinage est commandée au moins par l'intermédiaire d'un dispositif de déclenchement du freinage (11, 5, 12, 15) manoeuvrable à volonté,
dispositif présentant les caractéristiques suivantes:
a) au moins une vanne (4, 17a, 17b, 18a, 18b) de régulation de la pression, à commande électrique, est respectivement montée en amont d'au moins deux freins de roue;
b) le dispositif (5, 11, 12, 15) de déclenchement du freinage est monté en amont, du point de vue du pilotage ou du point de vue de l'arrivée du fluide, des vannes (4, 17a, 17b, 18a, 18b) de régulation de la pression;
c) il est prévu un circuit électronique de commande (23) qui traite les signaux de sortie des dispositifs de captage pour donner des signaux de commande pour les vannes (4, 17a, 17b, 18a, 18b) de régulation de la pression.
d) aux freins de roue correspondant chaque fois à une vanne (4, 17a, 17b, 18b) de régulation de la pression correspond un dispositif de captage (1a, 1b, 10a, 10b, 13a, 13b, 21a, 21b);
dispositif caractérisé par les caractéristiques suivantes:
e) les dispositifs de captage sont constitués de dispositifs (1a, 1b, 10a, 10b, 13a, 13b, 21a, 21b) de captage de la valeur de freinage pour saisir la force de freinage ou le couple de freinage, ci-dessous désignés par le concept global de valeur de freinage.
f) le circuit électronique de commande (23) est conçu de façon à piloter les vannes (4, 17a, 17b, 18a, 18b) de régulation de la pression pour que les pressions de freinage fournies, par les vannes (4, 17a, 17b, 18a, 18b) de régulation de la pression aux freins de roue (2a, 2b, 9a, 9b, 14a, 14b, 20a, 20b) puissent être pilotées en vue d'une adaptation mutuelle des valeurs de freinage, produites par les freins de roue (2a, 2b, 9a, 9b, 14a, 14b, 20a, 20b) en fonction d'un paramètre de valeur de freinage qui, de son côté, est essentiellement déterminé par la différence des valeurs de freinage.

2. Dispositif de commande de la pression de freinage pour un véhicule à moteur et/ou au moins une remorque, dont l'installation de freinage présente des freins de roue (2a, 2b, 2a, 9b, 14a, 14b, 20a, 20b) qui sont manoeuvrés par un fluide sous pression et dont la pression de freinage est commandée au moins par l'intermédiaire d'un dispositif de déclenchement du freinage (11, 5, 12, 15) manoeuvrable à volonté,
dispositif présentant les caractéristiques suivantes:
a) au moins une vanne (4, 17a, 17b, 18a, 18b) de régulation de la pression, à commande électrique, est respectivement montée en amont d'au moins deux freins de roue;
b) le dispositif (5, 11, 12, 15) de déclenchement du freinage est monté en amont, du point de vue du pilotage ou du point de vue de l'arrivée du fluide, des vannes (4, 17a, 17b, 18a, 18b) de régulation de la pression;
c) il est prévu un circuit électronique de commande (23) qui traite les signaux de sortie des dispositifs de captage pour donner des signaux de commande pour les vannes (4, 17a, 17b, 18a, 18b) de régulation de la pression.
d) aux freins de roue correspondant chaque fois à une vanne (4, 17a, 17b, 18b) de régulation de la pression correspond un dispositif de captage (1a, 1b, 10a, 10b, 13a, 13b, 21a, 21b);
dispositif caractérisé par les caractéristiques suivantes:
e) les dispositifs de captage sont constitués de dispositifs (1a, 1b, 10a, 10b, 13a, 13b, 21a, 21b) de captage de la température pour saisir la température des freins de roue;
f) le circuit électronique de commande (23) est conçu de façon à piloter les vannes (4, 17a, 17b, 18a, 18b) de régulation de la pression pour que les pressions de freinage fournies, par les vannes (4, 17a, 17b, 18a, 18b) de régulation de la pression aux freins de roue (2a, 2b, 9a, 9b, 14a, 14b, 20a, 20b) puissent être pilotées en vue d'une adaptation mutuelle des températures de frein de roue produites par les freins de roue (2a, 2b, 9a, 9b, 14a, 14b, 20a, 20b) en fonction d'un paramètre de température qui, de son côté, est essentiellement déterminé par la différence des températures doe freins de roue.

3. Dispositif de commande de la pression de freinage selon l'une des revendications 1 ou 2,
caractérisé par le fait que,
les vannes (4, 17a, 17b, 18a, 18b) de régulation de la pression peuvent être pilotées par les circuits électroniques de commande (23) en vue d'une égalisation mutuelle des valeurs de freinage produites par les freins de roue (2a, 2b, 9a, 9b 14a, 14b, 20a, 20b) ou des températures de frein de roue.

4. Dispositif de commande de la pression de freinage selon l'une des revendications 1 ou 2,
caractérisé par le fait que
les vannes (4, 17a, 17b, 18a, 18b) de régulation de la pression peuvent être commandées par les circuits électroniques de commande (23) en vue de l'adaptation des valeurs de freinage produites par les freins de roue ou les températures de freins de roue à une répartition prescrite de la charge sur essieu.

5. Dispositif de commande de la pression de freinage selon la revendication 3 et la revendication 4,
caractérisé par le fait que
jusqu'à une valeur de seuil prédéterminée de la pression commandée ou fournie par le dispositif de déclenchement de freinage, ou de sa force de manoeuvre ou de sa course de manoeuvre, les vannes de régulation de la pression sont commandées en vue d'une égalisation mutuelle des valeurs de freinage produites par les freins de roue ou des températures de frein de roue, et, en présence de valeurs supérieures à la valeur de seuil mentionnée, en vue de l'adaptation des valeurs de freinage ou des températures de frein de roue à la répartition prescrite de la charge sur essieu.

6. Dispositif de commande de la pression de freinage selon l'une des revendications précédentes,
caractérisé par le fait que
au circuit électronique de commande (23) correspond un dispositif à mémoire qui sert à faire correspondre à différents paramètres de la valeur de freinage ou de la température, en particulier sous forme de réseau de données, des signaux de commande pour le pilotage des vannes de régulation de la pression.

7. Dispositif de commande de la pression de freinage selon la revendication 6,
caractérisé par le fait que
les signaux de commande sont destinés à être convertis par le circuit électronique de commande (23) et par suite du pilotage des vannes (4, 17a, 17b, 18a, 18b) de régulation de la pression, en différences correspondantes de la pression de freinage.

8. Dispositif de commande de la pression de freinage selon la revendication 7,
caractérisé par le fait que
le circuit électronique de commande (23) est conçu de façon qu'à un instant prédéterminé après le début d'une manoeuvre de freinage, il interroge les signaux relatifs à la valeur de freinage ou les signaux relatifs à la température, qu'il y établisse le paramètre correspondant à la valeur de freinage ou correspondant à la température et qu'il commande les différences de la pression de freinage d'après les signaux de commande qui lui correspondent.

9. Dispositif de commande de la pression de freinage selon l'une des revendications 6 à 8,
caractérisé par le fait que
le circuit électronique de commande (23) et/ou le dispositif à mémoire sont conçus de façon à calculer et mémoriser, à partir des signaux relatifs à la valeur de freinage ou relatifs à la température introduits à l'occasion d'une ou de plusieurs manoeuvres de freinage antérieures, une valeur de correction de la pression de freinage ou son réseau de données, le circuit de commande électronique, en présence d'une manoeuvre de freinage, commandant alors les pressions de freinage en fonction de la valeur de correction de la pression de freinage respective, en commandant les vannes (17a, 17b, 18a, 18b) de régulation de la pression.

10. Dispositif de commande de la pression de freinage selon l'une des revendications 6 à 9,
caractérisé par le fait que
le circuit de commande électronique (23) et/ou le dispositif à mémoire sont conçus de façon à actualiser la valeur de correction de la pression de freinage ou son réseau de données ou les signaux de commande à l'aide des signaux relatifs à la valeur de freinage et/ou relatifs à la température introduits lors de la manoeuvre de freinage.

11. Dispositif de commande de la pression de freinage selon l'une des revendications 6 à 10,
caractérisé par le fait que
aux freins de roue correspondant respectivement à une vanne de régulation de la pression correspond chaque fois un capteur de pression (3a, 3b, 8a, 8b, 16a, 16b, 19a, 19b) pour saisir les pressions de freinage qui sont amenées aux freins de roue depuis les vannes de régulation de la pression et dont le signal de sortie, fonction de la pression de freinage et en tant que signal de la pression de freinage, est amené au circuit électronique de commande (23) et/ou au dispositif à mémoire en vue de surveiller que les pressions de freinage respectent les prescriptions définies par les signaux de commande.

12. Dispositif de commande de la pression de freinage selon la revendication 11,
caractérisé par le fait que
a) le dispositif (5, 11, 12, 15) de déclenchement du freinage est conçu sous forme de commande électrique de freinage avec un émetteur de freinage (11) et avec des modulateurs (5) qui établissent une pression de freinage correspondant à la valeur prescrite de l'émetteur de freinage;
b) les capteurs de pression (3a, 3b, 8a, 8b) servent au modulateur (5) respectivement correspondants à comparer la pression de freinage réelle avec la valeur prescrite de l'émetteur de freinage (11)

13. Dispositif de commande de la pression de freinage selon l'une des revendications 1 à 11,
caractérisé par le fait que
le dispositif de déclenchement de freinage présente au moins une vanne de freinage qui, à partir d'au moins une source de fluide sous pression, établit la pression de freinage, fonction de la pression de manoeuvre ou de la force de manoeuvre ou de la course de manoeuvre, ou la pression de commande de freinage pour les freins de roue, dispositif dans lequel les vannes de régulation de la pression sont constituées de vannes à dispositif antiblocage ABS qui présentent une position de passage, une position de verrouillage et une position d'annulation de la pression et qui, pour adapter la valeur de freinage ou la température des freins, lors de la manoeuvre de freinage ou lors du processus de desserrage des freins, peuvent être pilotées par le circuit électronique de commande (23) dans le sens d'une rétention de la pression de freinage envoyée aux freins de roue respectivement correspondants.
